# EUROPEAN PATENT APPLICATION

(11) **EP 2 455 907 A1**
(43) Date of publication of application: **23.05.2012**
(21) Application number: 11189159.4
(22) Date of filing: 15.11.2011
(51) Int. Cl.: G06Q 30/02

(54) **Dimensional rating of a mail piece using a touch screen on a mail kiosk**

(30) Priority: 17.11.2010 US 947919
(71) Applicant: Pitney Bowes, Inc., Stamford, CT 06926-0700 (US)
(72) Inventor: Lorello, Michael J., Guilford, CT 06437 (US); Sievel, Mark E., Newtown, CT 06470 (US)
(74) Representative: HOFFMANN EITLE

(57) **Abstract**

A system and method for determining the dimensions of a mail piece (38) using a built-in touch screen (16) of a mail kiosk. A mailer is instructed to place the mail piece (38) into a specified corner of the touch screen (16) of the mail kiosk. The user is then instructed to touch the touch screen (16) by the opposite corner of the mail piece. The touch screen (16) registers the location touched by the mailer, and provides the information to a processing device of the mail kiosk. The processing device uses the information received from the touch screen (16) to determine the dimensions of the mail piece (38).

## Description

The present invention relates generally to the concept of dimensional rating to determine the charge required by a carrier for delivery of a mail piece, and more particularly to a system and method for dimensional rating of a mail piece using a touch screen on a mail kiosk.

Mail kiosks are generally located in retail establishments, lobby areas of office buildings, and the like, whereby a user is able to prepare a mail piece for mailing in a convenient fashion. Such kiosks are designed to allow the user to select a class of service desired to deliver the mail piece, weigh the mail piece, calculate the fees for delivering the mail piece using the class of service desired by the user, and print a label including an indicium that evidences payment of the delivery fee for affixing to the mail piece. Examples of such mail kiosks can be found in U.S. Patent Nos. 5,586,037 and 6,477,514. Some mail kiosks can also print an address label based on information input by the user.

Various postal services and private delivery services (referred to herein collectively as "carriers") throughout the world have developed rating systems which are used to determine the fee associated with the delivery of a particular item, e.g., postcards, business envelopes, large envelopes, flats or the like, parcels, packages, etc., hereinafter collectively referred to as a mail piece. Generally, conventional rating systems utilize a variety of different parameters or factors which influence the fee structure, such as: weight of the mail piece, desired class of service (as examples, first class or third class in the United States), and destination of the mail piece. Some carriers use rating systems that also utilize the dimensions of a mail piece, e.g., length, width, and thickness (or height), in determining the fee for delivery of a mail piece. Rating of a mail piece based on the dimensions of the mail piece is commonly referred to as dimensional rating. For purposes of dimensional mail piece rating, there are several different categories each bounded by maximum dimensions of length, width and thickness.

A simple, but not convenient or always effective, manner of determining the dimensions of a mail piece is to hold a ruler or tape measure to each of the three dimensions of the mail piece and to read the length/width/thickness of the mail piece from the ruler/tape measure scale. A somewhat more sophisticated approach uses a template that has the length and width limits displayed together as a rectangle. This template must be unique to countries with different dimension requirements and replaced when those dimension requirements change. The mailer must compare the mail piece to the template and enter the appropriate information into the kiosk to determine the dimensions of the mail piece. This is prone to errors, as there is the possibility that the mailer will misread the template, thereby resulting in the improper dimensions of the mail piece being determined. In addition, such templates can be easily misplaced or damaged, thereby rendering them ineffective for their intended purpose. Templates also take up valuable space on the kiosk. This is especially important considering the desire to reduce the footprint of kiosks in retail environments.

The present invention provides a system and method that determines the dimensions of a mail piece using a touch screen of a mail kiosk. By using a built-in touch screen of a mail kiosk and associated software, a flexible and faster method of measuring mail piece dimensions is possible without having to replace any hardware in the field. In accordance with embodiments of the present invention, a mailer is instructed to place the mail piece into a specified corner of the touch screen of the mail kiosk. The user is then instructed to touch the touch screen at the opposite corner of the mail piece. The touch screen registers the location touched by the mailer, and provides the information to a processing device of the mail kiosk. The processing device uses the information received from the touch screen to determine the dimensions of the mail piece. Optionally, the determined dimensions can be compared to known standard sizes of mail pieces, that are stored in a memory, to result in more accurate determination of dimensions by substituting the stored value for the determined value under certain circumstances. By using the touch screen of the mail kiosk to aid in the dimension determination, the potential inaccuracies due to outdated templates or customer interpretation of the template's information are eliminated.

Therefore, it should now be apparent that the invention substantially achieves all the above aspects and advantages. Additional aspects and advantages of the invention will be set forth in the description that follows, and in part will be obvious from the description, or may be learned by practice of the invention. Moreover, the aspects and advantages of the invention may be realized and obtained by means of the instrumentalities and combinations particularly pointed out in the appended claims.

The accompanying drawings illustrate a presently preferred embodiment of the invention, and together with the general description given above and the detailed description given below, serve to explain the principles of the invention. As shown throughout the drawings, like reference numerals designate like or corresponding parts.
FIG. 1 illustrates in block diagram form a mail kiosk according to an embodiment of present invention;
FIG. 2 illustrates in flow diagram form the processing performed by the kiosk according to an embodiment of the present invention; and
FIGS. 3A-3C illustrate a portion of the mail kiosk during the processing performed as described in Fig. 2.

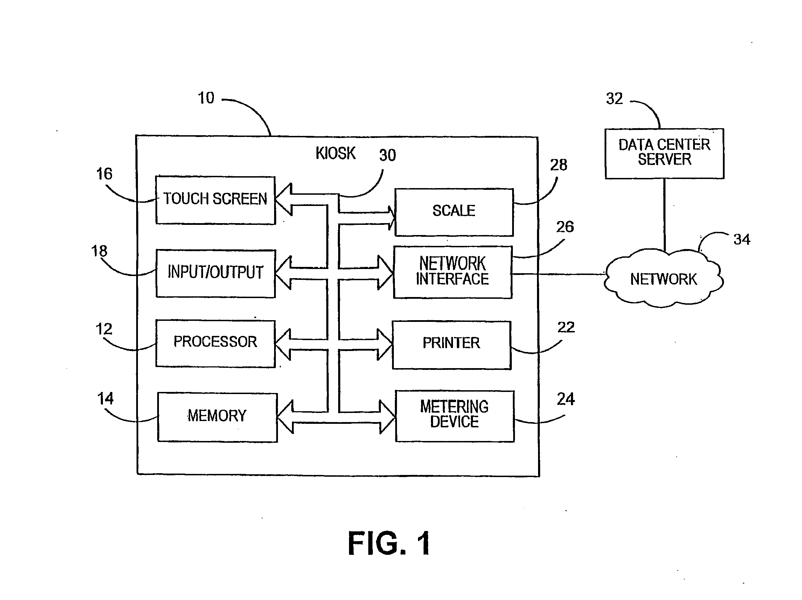

In describing the present invention, reference is made to the drawings, wherein there is seen in Fig. 1 a mail kiosk 10 according to an embodiment of the present invention. Kiosk 10 can be provided in any area, e.g., retail stores, hotel or office building lobbies, office building mail rooms, or the like, such that anyone having access to those areas can utilize the kiosk to pay for and generate indicia for delivering mail pieces. Kiosk 10 includes a processor 12 that controls operation of the kiosk 10. The processor 12 may be any type of general or special purpose processor or the like that executes one or more software routines stored in a memory 14. A touch screen device 16 is provided to both accept inputs from a user and to provide information to a user in the form of images or text displayed on the screen. Touch screen 16 could utilize, for example, any conventional touch screen technology such as, for example, resistive, capacitive, infrared, surface acoustic wave, or any other touch screen technology known in the art. Additional input/output devices 18 may also be provided, and can include, for example, a keyboard, speaker, mouse or the like. A printer 22 is provided to print information on mail pieces or labels. Such information could include postage indicia, address labels or the like. A metering device 24 can be provided to account and generate for postage indicia. A scale 28 is preferably provided to determine the weight of a mail piece. A network interface 26, e.g., modem, network card, or the like, can be provided to enable the kiosk 10 to communicate with a remote data center server 32 via a network 34. Network 34 can be, for example, a local area network (LAN), mobile telephone network, or the Internet. Remote server 32 can be any type of processing device. A communication bus 30 is provided to allow each of the components of the kiosk 10 to communicate with each other.

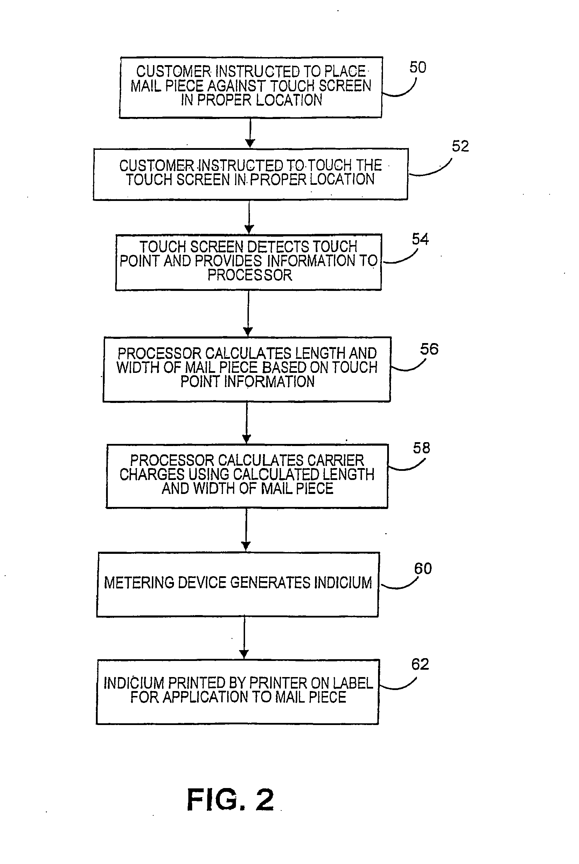

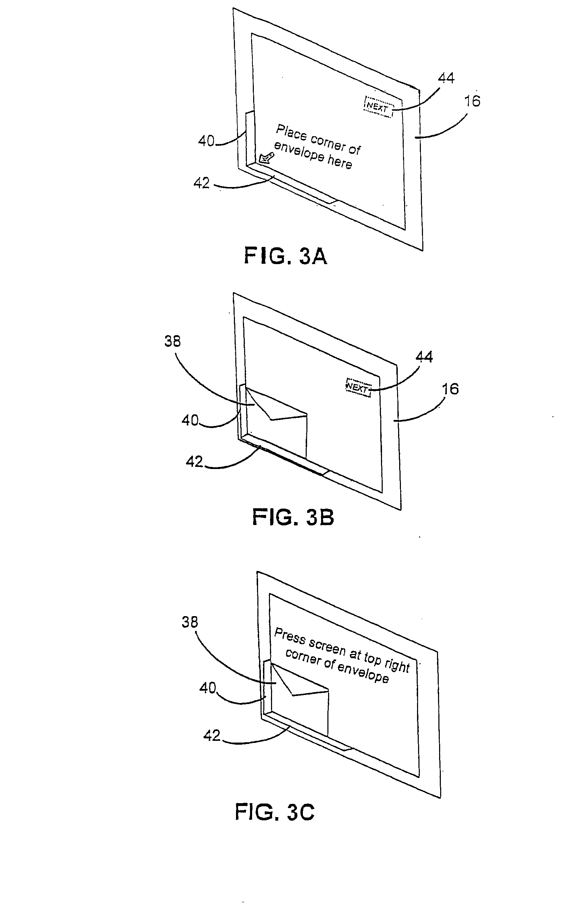

Fig. 2 illustrates in flow diagram form the processing performed by the kiosk 10 to determine the dimensions of a mail piece according to an embodiment of the present invention. The processing as illustrated in Fig. 2 can occur either before or after the weight of the mail piece has already been determined by the scale 28 of kiosk 10 and the customer has provided information about the mail piece, such as the destination zip code, class of service desired, type of service desired, etc. At some point in the processing of the mail piece, when it is necessary to determine the length and/or width dimension of the mail piece, the customer is instructed, in step 50, to place the mail piece (38 of Fig. 3B) against the touch screen 16 in a specified location, e.g., with the lower left corner registered in the corner where two registration plates (40, 42 of Fig. 3A) form a right angle. This may be, for example, the lower left corner of the touch screen 16 as illustrated in Fig. 3A, which provides a predetermined reference point for the processor 12 to utilize during determination of the dimensions. As illustrated in Fig. 3A, these instructions could be provided by a display on the touch screen 16. Alternatively, these instructions could be provided by written labels secured on the mail kiosk 10 adjacent to the touch screen 16, or by audio commands using the input/output device 18. Once the customer has placed the mail piece 38 in the specified location, as illustrated in Fig. 3B, the customer can touch the NEXT button 44, displayed on the touch screen 16, to continue processing. In step 52, the customer is next instructed to touch the screen next to a specified corner of the mail piece, and more specifically at the opposite corner from where the corner of the mail piece 38 is registered against the registration plates 40, 42, e.g., the top right corner of the mail piece 38 as illustrated in Fig. 3C. As illustrated in Fig. 3C, these instructions could be provided by a display on the touch screen 16. Alternatively, these instructions could be provided by written labels secured on the mail kiosk 10 adjacent to the touch screen 16, or by audio commands using the input/output device 18. In step 54, the touch screen 16 detects the touch point of the customer, and sends a signal to the processor 12. In step 56, the processor 12 calculates the length and/or width of the mail piece 38 based on the coordinates of the touch point provided by the touch screen 16 and the known reference point of the lower left corner.

Alternatively, to improve the accuracy of the dimensions, the processor 12 can compare the dimensions determined from the touch point information with the dimensions of known, standard sized envelopes stored in the memory 14. These stored values can then be substituted for the dimensions that were obtained from the touch screen interaction by the customer. Thus, for example, if the mail piece is a #10 envelope (which measures 4 ⅛ x 9 ½ inches) and the touch point of the customer is not exactly on the corner of the envelope, but instead about ¼ inch from the corner, the mail piece would be determined to be 4 % by 9 ¾ inches. Processor 12 would determine if these determined values were within some threshold value of any standard sized envelopes stored in the memory 14 (for example within ½ inch). If the determined size was within a threshold value of a standard size envelope, processor 12 will substitute the actual known dimensions of the standard size envelope for the determined dimensions. This can be used to compensate for any inaccuracies in determining the dimensions due to the customer not touching the touch screen 16 at exactly the right location.

In step 58, the processor 12 can then use the determined length and width of the mail piece (either the actual determined dimensions or substituted dimensions) to determine the carrier charge for delivery of the mail piece 38. In step 60, the metering device 24 generates an indicium that evidences the payment of the charges determined in step 58 (which can be charged to a credit card of the customer or by a cash payment made by the customer). In step 62, the printer 22 prints the generated indicium on a label that can be applied to the mail piece 38.

Using the touch screen 16 to determine the dimensions of a mail piece 38 enables the customer to quickly enter accurate dimension information about their mail piece without the need for a mechanical template. Eliminating the need for a template results in the mail kiosk having a smaller footprint, in addition to eliminating the need for the customer to visually compare the mail piece to a template and manually enter into the kiosk how the mail piece compares to the limits printed on the template. Additionally, since the dimensional rating information is stored electronically, it can be downloaded when changes occur, eliminating the need to have to replace templates.

While preferred embodiments of the invention have been described and illustrated above, it should be understood that these are exemplary of the invention and are not to be considered as limiting. Additions, deletions, substitutions, and other modifications can be made without departing from the spirit or scope of the present invention. Accordingly, the invention is not to be considered as limited by the foregoing description.

## Claims

1. A method for determining at least one dimension of a mail piece (38) utilizing a touch screen (16) of a mail kiosk (10), the method comprising:
providing (50) instructions to a user to place the mail piece (38) in a specified location on the touch screen (16) of the mail kiosk (10);
providing (52) instructions to the user to touch the touch screen (16) next to a specified corner of the mail piece (38);
sending (54) a signal from the touch screen (16) to a processing device (12) of the mail kiosk (10) indicating a location touched by the user;
determining (56), by the processing device (12), at least one dimension of the mail piece (38) based on the location touched by the user and a predetermined reference point associated with the specified location on the touch screen (16); and
determining (58), by the processing device (12), carrier charges for delivery of the mail piece (38) based at least in part on the determined at least one dimension.

2. The method of claim 1, further comprising:
comparing, by the processing device (12), the determined at least one dimension with dimensions of standard sized mail pieces stored in a memory (14); and
substituting the determined at least one dimension with a dimension of a standard sized mail piece from the memory (14) if the determined at least one dimension is within a threshold value of the dimension of the standard sized mail piece.

3. The method according to claim 1 or 2, wherein the at least one dimension is a width of the mail piece (38).

4. The method according to claim 1 or 2, wherein the at least one dimension is a length of the mail piece (38).

5. The method of any preceding claim, wherein the specified location on the touch screen (16) is a lower left corner of the touch screen (16).

6. The method of any preceding claim, wherein the specified location is against a pair of registration plates (40) that form a right angle.

7. The method of any preceding claim, wherein the instructions to place the mail piece (38) in a specified location on the touch screen (16) and to touch the touch screen (16) next to a specified corner of the mail piece (38) are provided by the touch screen (16).

8. A kiosk (10) for processing a mail piece (38) comprising:
a touch screen (16); and
a processing device (12) coupled to the touch screen (16), the processing device (12) being programmed to a receive a signal from the touch screen (16) indicating a location touched by a user based on the size of the mail piece (38) placed on the touch screen (16), to determine at least one dimension of the mail piece (38) based on the location touched by the user and a predetermined reference point on the touch screen (16), and to determine carrier charges for delivery of the mail piece (38) based at least in part on the determined at least one dimension.

9. The kiosk according to claim 8, further comprising:
a memory device (14) to store dimensions of standard sized mail pieces;
wherein the processor (12) is further programmed to compare the determined at least one dimension with dimensions of standard sized mail pieces stored in the memory (14) and substitute the determined at least one dimension with a dimension of a standard sized mail piece from the memory (14) if the determined at least one dimension is within a threshold value of the dimension of the standard sized mail piece.

10. The kiosk according to claim 8 or 9, wherein the processor (12) is further programmed to provide instructions to the user to place the mail piece (38) in a specified location on the touch screen (16) of the mail kiosk (10) and to provide instructions to the user to touch the touch screen (16) next to a specified corner of the mail piece (38).

11. The kiosk according to claim 8, 9 or 10, wherein the at least one dimension is a width of the mail piece (38).

12. The kiosk according to claim 8, 9 or 10, wherein the at least one dimension is a length of the mail piece.
